# EUROPÄISCHE PATENTSCHRIFT

(11) **EP 0 426 995 B1**
(45) Veröffentlichungstag und Bekanntmachung des Hinweises auf die Patenterteilung: **01.12.1993**
(21) Anmeldenummer: 90119297.1
(22) Anmeldetag: 09.10.1990
(51) Int. Cl.: B60G 17/033, B60G 21/06

(54) **Hydropneumatisches Federungssystem**
Hydropneumatic spring system
Système de suspension hydropneumatique

(30) Priorität: 07.11.1989 DE 3936987; 06.02.1990 DE 4003493
(43) Veröffentlichungstag der Anmeldung: 15.05.1991
(73) Patentinhaber: MERCEDES-BENZ AG, 70327 Stuttgart (DE)
(72) Erfinder: Karnopp, Dean C., Prof. Dr., 95616 Davis, California (US); Sahm, Dietrich, Dr.-Ing., W-7432 Bad Urach (DE); Klinkner, Walter, W-7000 Stuttgart 75 (DE); Scarpatetti von, Dieter, W-7300 Esslingen (DE)

(56) Entgegenhaltungen:
- DE-A- 1 157 938
- DE-A- 2 923 357
- US-A- 3 298 709
- US-A- 3 356 954
- US-A- 4 030 777

## Beschreibung

Die Erfindung betrifft ein hydropneumatisches Federungssystem für Kraftfahrzeuge gemäß dem Oberbegriff des Anspruchs 1 mit den Fahrzeugrädern zugeordneten hydropneumatischen Abstützaggregaten und einer damit zusammenwirkenden, relativ träge arbeitenden Niveauregulierung, die über Niveausteuerventile die Abstützaggregate in Abhängigkeit von der Hubstellung der Räder zur Aufnahme von Hydraulikmedium mit einer hydraulischen Druckquelle bzw. zur Ableitung von Hydraulikmedium aus den Abstützaggregaten mit einem Reservoir verbindet, sowie mit einem parallel zur Niveauregulierung zwischen den Abstützaggregaten angeordneten Bypaß- und Fördersystem, welches Hydraulikmedium unter Umgehung des Reservoirs und der Druckquelle zwischen Abstützaggregaten verschiedener Räder zu verschieben gestattet.

Fahrzeuge mit derartigen Federungssystemen sind aus der DE-A 29 23 357 bekannt und zeichnen sich durch hohen Federungskomfort aus. Bei dem Bypaß- bzw. Fördersystem handelt es sich im Falle der DE-A 29 23 357 um ein rein passiv arbeitendes Lastübertragungsregelsystem, welches dazu dient, Wankmomente des Fahrzeugaufbaus in einem vorgegebenen Verhältnis auf die Vorder- und Hinterräder des Fahrzeuges zu übertragen. Auf diese Weise läßt sich beispielsweise gewährleisten, daß die Wankmomente überwiegend über die Vorderräder aufgenommen werden und dementsprechend ein untersteuerndes Fahrverhalten erreicht wird, wie es in der Regel erwünscht ist.

Das Lastübertragungsregelsystem besitzt gemäß der DE-A 29 23 357 zwei doppeltwirkende Kolben-Zylinder-Aggregate, wobei das eine Aggregat den Hinterrädern und das andere Aggregat den Vorderrädern zugeordnet ist. Der Kolben jedes Aggregates wird auf seiner einen Wirkfläche vom Druck im Abstützaggregat des einen Vorder- bzw. Hinterrades und auf seiner anderen Wirkfläche vom Druck im Abstützaggregat des anderen Vorder- bzw. Hinterrades beaufschlagt. Die Kolben beider Kolben-Zylinder-Aggregate sind miteinander zwangsgekoppelt, wobei durch unterschiedlich bemessene Kolbenquerschnitte bzw. durch entsprechend ausgebildete Koppelelemente ein vorgegebenes Übersetzungsverhältnis erreicht wird. Treten nun Wankbewegungen des Fahrzeugaufbaus auf, so wirkt auf jeden Kolben der Kolben-Zylinder-Aggregate eine Druckdifferenz, die der Differenz der Drucke der Abstützaggregate an der Vorderachse bzw. der Hinterachse entsprechen. Diese Druckdifferenzen suchen die Kolben der Kolben-Zylinder-Aggregate zu verschieben, wobei die den einen Kolben verschiebende Kraft über die Koppelelemente zwischen den beiden Kolben der dem anderen Kolben verschiebenden Kraft entgegenzuwirken sucht. Aufgrund des vorgenannten Übersetzungsverhältnisses wird dann eine Aufteilung der den Wankmomenten entgegenwirkenden Abstützkräfte auf die Vorder- und Hinterräder bzw. die zugeordneten Abstützaggregate erreicht.

Ein grundsätzlicher Nachteil des aus der DE-A 29 23 357 bekannten Federungssystems liegt darin, daß die Niveauregulierung aufgrund ihres trägen Ansprechverhaltens nur in beschränktem Maße beim Auftreten größerer Federungshübe wirksam wird und den in extremer Einfederstellung befindlichen Abstützaggregaten zusätzliches Hydraulikmedium zuführt bzw. aus den in extremer Ausfederstellung befindlichen Abstützaggregaten Hydraulikmedium abführt.

Zwar ist es grundsätzlich möglich, eine schnellwirkende Niveauregulierung anzuordnen. Jedoch wird dann der Leistungsbedarf unerwünscht hoch. Dies gilt insbesondere dann, wenn Nick- oder Wankbewegungen des Fahrzeugaufbaus entgegengewirkt werden soll.

Aus der DE-A 36 39 995 ist es bei hydropneumatischen bzw. pneumatischen Federungssystemen bekannt, die Eingangsseite eines Verdichters sowie dessen Ausgangsseite über entsprechende Schaltventile mit den pneumatischen Federspeichern sämtlicher Abstützaggregate zu verbinden, derart, daß sich willkürlich pneumatisches Medium aus einem Abstützaggregat zu einem anderen Abstützaggregat fördern läßt. Auf diese Weise kann sowohl Nick- als auch Wankmomenten entgegengewirkt werden. Gegebenenfalls kann dieses System mit Niveauregeleinrichtungen ergänzt werden, wobei hierfür auch die für den Ausgleich der Fahrzeugneigung vorgesehenen Lageregelelemente, d.h. die Schaltventile, verwendet werden können.

Die DE-B 10 50 669 zeigt ein pneumatisches Federungssystem, bei dem zwischen den pneumatischen Abstützaggregaten einer Fahrzeugachse ein doppeltes Kolben-Zylinder-Aggregat angeordnet ist, derart, daß aus dem einen Abstützaggregat Pneumatikmedium abgeführt und gleichzeitig Pneumatikmedium in das andere Abstützaggregat eingeführt werden kann, um Wankmomenten entgegenzuwirken.

Aufgabe der Erfindung ist es nun, ein hydropneumatisches Federungssystem zu schaffen, welches bei geringem Leistungsbedarf die Möglichkeit bietet, aktiv Wank- und Nickbewegungen des Fahrzeuges entgegenzusteuern, wobei auch bei einer Betriebsstörung gute Notlaufeigenschafen gewährleistet sein sollen.

Diese Aufgabe wird erfindungsgemäß dadurch gelöst, daß das Bypaß- und Fördersystem ein aktiv angetriebenes Förderaggregat zur direkten Verschiebung von Hydraulikmedium zwischen einander bezüglich der Fahrzeuglängsachse und/oder der Fahrzeugquerachse gegenüberliegenden Abstützaggregaten in Abhängigkeit von der Hubstellung der Räder und/oder in Abhängigkeit von auf das Fahrzeug einwirkenden Nick- bzw. Wankmomenten aufweist, im Vergleich zur Niveauregulierung schnellwirkend arbeitet und sich bei einer Störung, insbesondere eines zugeordneten Rechners, unter Blockierung seiner Leitungen selbstsichernd stillsetzt, wobei ein im Zeitpunkt des Auftretens der Störung vorliegender Lageausgleich über die Niveauregulierung abgebaut wird.

Bei der Erfindung wird also unmittelbar zwischen den Abstützaggregaten verschiedener Fahrzeugseiten bzw. zwischen den vorderen und hinteren Abstützaggregaten Hydraulikmedium verschoben,um eine Fahrzeugseite bei gleichzeitiger Absenkung der anderen Fahrzeugseite anzuheben bzw. das Fahrzeugvorderteil in entsprechender Weise gegenläufig zum Fahrzeugheck zu bewegen. Dadurch kann Wank- und Nickmomenten entgegengewirkt werden.

Da die Verschiebung des Hydraulikmediums zwischen den Abstützaggregaten allenfalls einen geringen Einfluß auf die Federkennung hat, wird ein besonders hoher Komfort gewährleistet.

Weiterhin ist vorteilhaft, daß sich ein gut reproduzierbares Betriebsverhalten ergibt, weil das Volumen des jeweils aus einem Abstützaggregat abgeführten Hydraulikmediums sowie das Volumen des jeweils in ein Abstützaggregat eingeführten Hydraulikmediums praktisch unabhängig von der Belastung der jeweiligen Abstützaggregate ist. Dies beruht darauf, daß hydraulische Medien praktisch nicht kompressibel sind.

Außerdem ist vorteilhaft, daß das Bypaß- und Fördersystem bei stillgesetztem Antriebsmotor seines Förderaggregates einen blockierten Zustand ohne Leistungszufuhr einnimmt und dementsprechend keinerlei Leistung benötigt wird, solange weder Wank- noch Nickmomente auftreten.

Bei einer Störung des Bypaß- und Fördersystems, d.h. insbesondere bei einer Störung der zugeordneten elektronischen Steuerung, ist ein gutes Notlaufverhalten des Fahrzeuges gewährleistet. In diesem Falle braucht das Bypaß- und Fördersystem lediglich abgeschaltet, d.h. von seiner Energieversorgung abgetrennt zu werden. Damit werden zwangsläufig die Leitungen des Bypaß- und Fördersystems oder dessen Fördereinrichtung blockiert. Selbst wenn diese Blockierung nach einer Verschiebung einer größeren Menge von Hydraulikmedium zwischen verschiedenen Abstützaggregaten auftreten sollte, bleibt das Fahrzeug voll beherrschbar. Denn die Niveauregulierung wird nunmehr die Verschiebung des Hydraulikmediums - wenn auch mit einer gewissen Trägheit - wieder ausgleichen und insgesamt ein Fahrverhalten gewährleisten, wie es bei Fahrzeugen mit herkömmlichen hydropneumatischen Federungssystemen ohne das erfindungsgemäße aktive Bypaß- und Fördersystem gegeben ist.

Gemäß einer ersten vorteilhaften Ausführungsform der Erfindung kann das Bypaß- und Fördersystem im wesentlichen aus einem zwischen den Abstützaggregaten angeordneten Leitungsnetz mit einer motorisch angetriebenen Pumpe sowie am Leitungsnetz angeordneten Absperrventilen bestehen, welche jeweils ein Abstützaggregat bzw. eine Gruppe der Abstützaggregate mit der Eingangsseite der Pumpe und ein anderes Abstützaggregat bzw. eine andere Gruppe der Abstützaggregate mit der Ausgangsseite der Pumpe zu verbinden bzw. die Abstützaggregate oder deren Gruppen voneinander abzutrennen gestatten. Bei dieser Anordnung genügt also für das Bypaß- und Fördersystem eine einzige zentrale Pumpe. Durch entsprechende Steuerung der Ventile kann dann eine Verschiebung von Hydraulikmedium zwischen ausgewählten Abstützaggregaten erreicht werden. Durch eine Art von Multiplexbetrieb kann dabei auch erreicht werden, daß eine praktisch simultane Verschiebung von Hydraulikmedium zwischen einer Vielzahl von Abstützaggregaten in steuerbarer Weise erfolgt.

Bei einer zweiten bevorzugten Ausführungsform der Erfindung sind zwischen einander bezüglich der Fahrzeugquerachse und/oder der Fahrzeuglängsachse gegenüberliegenden Abstützaggregaten Verdränger- bzw. Kolben-Zylinder-Aggregate mit zwei Kammern angeordnet, deren Gesamtvolumen unabhängig vom Verdränger- bzw. Kolbenhub konstant bleibt, so daß das auf der einen Seite aus einem Abstützaggregat bzw. einer Gruppe der Abstützaggregate abgeführte Hydraulikmedium in gleicher Menge einem anderen Abstützaggregat bzw. einer anderen Gruppe der Abstützaggregate zugeführt werden kann.

Unabhängig von der Ausbildung des Bypaß- und Fördersystems kann es zweckmäßig sein, die hydropneumatischen Abstützaggregate parallel zu mechanischen Federaggregaten, beispielsweise herkömmlichen Schraubenfedern, anzuordnen, so daß die Räder gegenüber dem Aufbau jeweils hydropneumatisch und mechanisch abgestützt werden. Auf diese Weise kann ein nahezu belastungsunabhängiges Federungsverhalten des Fahrzeuges ohne belastungsabhängige Veränderung der Resonanzfrequenzen für Hubbewegungen des Aufbaues (Aufbauresonanz) bzw. Hubschwingungen der Räder (Radresonanz) gewährleistet werden.

Im übrigen wird hinsichtlich bevorzugter Merkmale der Erfindung auf die Ansprüche sowie die nachfolgende Erläuterung bevorzugter Ausführungsformen anhand der Zeichnung verwiesen.

Dabei zeigt
- Fig. 1: eine erste Ausführungsform des erfindungsgemäßen Federungssystemes, wobei das Bypaß- und Fördersystem durch ein Leitungsnetz mit einer Vielzahl von Absperrventilen und einer einzigen zentralen Pumpe gebildet wird,
- Fig. 2: eine zweite Ausführungsform der Erfindung, bei der das Bypaß- und Fördersystem unter Verwendung doppeltwirkender, ein Zweikreissystem bildender Kolben-Zylinder-Aggregate aufgebaut ist, die jeweils zwischen den Abstützaggregaten verschiedener Fahrzeugseiten bzw. verschiedener Achsen angeordnet sind und
- Fig. 3: eine weitere Ausführungsform mit doppeltwirkenden Kolben-Zylinder-Aggregaten mit besonders einfachem Aufbau.

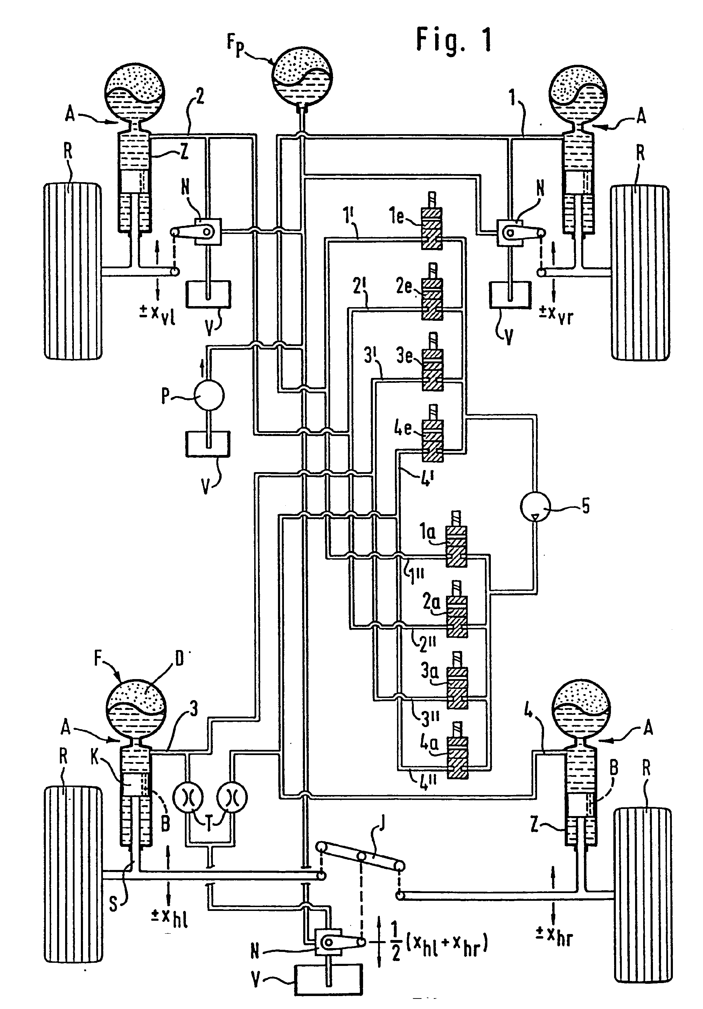

Bei allen in der Zeichnung dargestellten Ausführungsformen ist jedem Rad R des Fahrzeuges ein hydropneumatisches Abstützaggregat A zugeordnet, welches in an sich bekannter Weise im wesentlichen aus einem Kolben-Zylinder-Aggregat mit einem Zylinder Z sowie einem Kolben K mit einseitig angeordneter Kolbenstange S und den Kolben K axial durchsetzenden Bohrungen B sowie einen mit dem Zylinder Z verbundenen Federspeicher F besteht. Die Zylinder Z sind jeweils auf beiden Seiten des zugehörigen Kolbens K mit Hydraulikmedium gefüllt, ebenso wie der mit dem jeweiligen Zylinder Z kommunizierende Bereich des jeweiligen Federspeichers F. Innerhalb des Federspeichers F ist darüber hinaus ein Druckgaspolster D angeordnet, welches vom Hydraulikmedium durch eine elastische Membrane od.dgl. abgetrennt ist. Bei Ein- und Ausfederbewegungen der Räder R wird der jeweilige Kolben K im zugeordneten Zylinder Z verschoben. Bei einer Verschiebung in Einfederrichtung wird dabei Hydraulikmedium aus der in den Fig. 1 bis 3 jeweils oberhalb des Kolbens K liegenden Kammer des Zylinders Z durch die kolbenseitigen Bohrungen B hindurch in die andere Kammer des Kolben-Zylinder-Aggregates sowie teilweise auch in den jeweiligen Federspeicher F verdrängt, so daß das jeweilige Druckgaspolster komprimiert wird. Bei einer Verschiebung des Kolbens K in Ausfederrichtung wird jeweils Hydraulikmedium aus der kolbenstangenseitigen Kammer des jeweiligen Kolben-Zylinder-Aggregates in die jeweils oberhalb des Kolbens K liegende Kammer verdrängt, gleichzeitig strömt Hydraulikmedium aus dem jeweiligen Federspeicher F in diese letztgenannte Kammer, wobei das Druckgaspolster D des jeweiligen Federspeichers entsprechend expandiert.

Die jeweilige statische Abstützkraft der Abstützaggregate A wird durch den Druck des hydraulischen Mediums im Kolben-Zylinder-Aggregat sowie im damit verbundenen Federspeicher F und den Querschnitt der Kolbenstange S bzw. die Flächendifferenz zwischen der oberen und unteren Wirkfläche des jeweiligen Kolbens K bestimmt.

Die mittlere Höhenlage der Räder R relativ zum nicht dargestellten Aufbau des Fahrzeuges wird durch die Menge des Hydraulikmediums in den Abstützaggregaten A bestimmt.

Um die Menge des Hydraulikmediums in den Abstützaggregaten A für eine Niveauregulierung des Fahrzeuges verändern zu können, können die Abstützaggregate A über Niveausteuerventile N nach außen abgesperrt bzw. entweder mit einem Reservoir bzw. Vorratsbehälter V Fluidmedium oder mit der Druckseite einer Pumpe P verbunden werden, mit der dann dem jeweiligen Abstützaggregat A Hydraulikmedium aus dem Reservoir bzw. Vorratsbehälter V zugeführt wird. Um dabei Druckstöße zu vermeiden, ist an der Druckleitung der Pumpe P ein zusätzlicher Federspeicher F_{P} angeordnet.

Den Abstützaggregaten A der Vorderräder (welche in den Fig. 1 bis 3 jeweils im oberen Teil abgebildet sind) kann jeweils ein separates Niveausteuerventil N zugeordnet werden, das in Abhängigkeit von der Hubstellung xᵥᵣ bzw. xᵥₗ des jeweiligen Rades betätigt wird. In einem relativ breiten Mittelbereich der genannten Hubstellungen sind dabei die Niveausteuerventile N der Abstützaggregate A der Vorderräder geschlossen. Bei starker Verschiebung der Räder R bzw. Kolben K in Ausfederrichtung wird das jeweilige Abstützaggregat A mit dem Reservoir bzw. Vorratsbehälter V verbunden, um Hydraulikmedium aus dem jeweiligen Abstützaggregat A abzuleiten und damit das jeweilige Rad R in Einfederrichtung zu bewegen. Verschieben sich die Räder R bzw. die jeweiligen Kolben K stark in Einfederrichtung, so stellen die Niveausteuerventile N eine Verbindung zwischen der Druckseite der Pumpe P und dem jeweiligen Abstützaggregat A her, um in das jeweilige Abstützaggregat A zusätzliches Hydraulikmedium einzuleiten und das jeweilige Rad R in Ausfederrichtung zu bewegen.

Den Fahrzeughinterrädern (in den Fig. 1 bis 3 jeweils im unteren Teil abgebildet) ist ein gemeinsames Niveausteuerventil N zugeordnet, welches in Abhängigkeit vom arithmetischen Mittelwert der Hubstellungen xₕₗ und xₕᵣ der hinteren Räder R gesteuert wird. Auf diese Weise ist gewährleistet, daß das Fahrzeug immer eine statisch eindeutige Dreipunktabstützung erhält.

Bei Verwendung eines ausreichend stark wirkenden Stabilisators für die Aufnahme der Wankmomente bei Kurvenfahrt oder unsymmetrischer Fahrzeugbeladung, kann auch an der Vorderachse ein gemeinsam beide Abstützaggregate A steuerndes Niveausteuerventil N vorgesehen werden, wodurch das Fahrzeug eine "Zweipunktabstützung mit mechanischer Wankfeder" erhält.

Um die Steuerung des den hinteren Rädern R zugeordneten Niveausteuerventiles N in Abhängigkeit vom Mittelwert der Hubstellungen xₕᵣ und xₕₗ zu ermöglichen, sind beispielsweise die Enden eines Joches J mit den Radaufhängungen der hinteren Räder R gekoppelt, so daß das eine Ende des Joches eine den Federungshüben des einen Hinterrades und das andere Ende des Joches J eine den Federungshüben des anderen Hinterrades entsprechende translatorische Bewegung ausführt. Wenn nun ein Punkt des Joches J in der Mitte zwischen den Enden des Joches J mit einem Stellorgan des hinteren Niveausteuerventiles N antriebsverbunden ist, wird dieses Ventil N in Abhängigkeit von dem gewünschten Mittelwert gesteuert.

Eine andere Art der Mittelwertbildung der Hubstellungen xₕᵣ und xₕₗ der Hinterräder ist dadurch möglich, daß der Abgriff für das Steuern des gemeinsamen Niveausteuerventils N in der Mitte eines nicht dargestellten Drehstabstabilisators erfolgt.

In der die Abstützaggregate A der hinteren Räder R verbindenden Leitung können beidseitig des Niveausteuerventiles N der Hinterräder Drosseln T angeordnet sein, um eine ungedämpfte und schnelle Strömung von Hydraulikmedium vom einen zum anderen Abstützaggregat A und damit eine unerwünscht starke Rückwirkung der Federungshübe des einen Hinterrades auf die Federungsbewegungen des anderen Hinterrades zu vermeiden.

Die oben beschriebene Ausbildung des hydropneumatischen Federungssystemes ist bei den in den Fig. 1 bis 3 dargestellten Ausführungsformen in prinzipiell gleicher Weise vorgesehen und - an sich - bekannt. Insofern unterscheidet sich die Erfindung also nicht von herkömmlichen hydropneumatischen Federungssystemen.

Die Besonderheit der Erfindung liegt vor allem in der Art und Weise, wie Nick- bzw. Wankbewegungen des Fahrzeugaufbaus entgegengewirkt wird.

Grundsätzlich ist es zwar möglich, dazu die oben beschriebenen Elemente des hydropneumatischen Federungssystems einzusetzen. Jedoch wird dann für die Pumpe P eine hohe Leistung benötigt, weil Nick- und Wankbewegungen des Aufbaus - ohne zusätzliche andere Maßnahmen - nur dann entgegengewirkt werden kann, wenn mit der Pumpe P kurzzeitig relativ große Mengen des Hydraulikmediums aus dem Reservoir bzw. Vorratsbehälter V zu jeweils in Einfederrichtung stark beanspruchten Abstützaggregaten A gefördert werden kann. Dabei muß immer mindestens die volle Druckdifferenz zwischen dem Hydraulikdruck in den Abstützaggregaten A und dem praktisch verschwindenden Hydraulikdruck in dem Reservoir bzw. Vorratsbehälter V überwunden werden.

Erfindungsgemäß ist deshalb vorgesehen, die oben beschriebenen Systemkomponenten lediglich zur Einstellung der mittleren Höhenlage des Fahrzeugaufbaus relativ zur Fahrbahn einzusetzen. Für diesen Zweck reicht eine Pumpe P mit geringer Leistung, weil die mittlere Höhenlage des Fahrzeuges praktisch nur beim Start eingestellt werden muß und danach unverändert bleibt bzw. keine schnelle Änderung erfordert.

Um Nick- und Wankbewegungen des Fahrzeuges schnell und wirksam entgegenwirken zu können, ist zwischen den Abstützaggregaten A ein gesondertes, aktives Bypaß- und Fördersystem angeordnet.

Dieses besteht bei der in Fig. 1 dargestellten Ausführungsform im wesentlichen aus einem Leitungsnetzwerk mit den zu den einzelnen Abstützaggregaten A führenden Leitungen 1 bis 4, die über Leitungen 1',1'' bis 4',4'' mit eingangsseitig einer motorisch angetriebenen Pumpe 5 angeordneten Absperrventilen 1e bis 4e bzw. ausgangsseitig der Pumpe 5 angeordneten Absperrventilen 1a bis 4a verbunden sind.

Solange keinerlei Wank- bzw. Nickbewegungen des Fahrzeuges auftreten, bleiben die genannten Ventile 1a bis 4e geschlossen. Die Pumpe 5 steht in diesem Fall still.

Falls nun Nickbewegungen des Fahrzeuges auftreten, kann denselben entgegengewirkt werden, indem die Pumpe 5 je nach Richtung der Nickbewegung entweder Hydraulikmedium aus den Abstützaggregaten A der Hinterräder über die Leitungen 3 bzw. 4 abführt und den Abstützaggregaten A der Vorderräder über die Leitungen 1 bzw. 2 zuführt oder in umgekehrter Richtung wirksam wird. Wenn beispielsweise aus dem Abstützaggregat A des rechten Hinterrades Hydraulikmedium abgeführt und gleichzeitig dem Abstützaggregat A des rechten Vorderrades Hydraulikmedium zugeführt werden soll, werden die Ventile 4e und 1a geöffnet, so daß die genannten Abstützaggregate über die Pumpe 5 miteinander verbunden werden und Hydraulikmedium in der angegebenen Weise zwischen den Abstützaggregaten A der rechten Fahrzeugseite verschoben wird. Dabei bleiben die übrigen Absperrventile jeweils geschlossen.

Vorteilhaft für den Energieverbrauch des aktiven Bypaß- und Fördersystems ist es, wenn dessen Antrieb nach Erreichen eines entsprechenden "Endzustandes", d.h. nachdem eine den jeweiligen Fahrzuständen entsprechende Menge Hydraulikmedium umgepumpt worden ist (z.B. bei stationärer Kurvenfahrt), abgeschaltet werden kann und - solange sich der Fahrzustand nicht ändert - in dieser abgeschalteten Stellung verharrt, ohne daß das umgepumpte Hydraulikmedium in seine ursprünglich zugehörigen Abstützaggregate rückfließen kann.

Falls Hydraulikmedium aus dem vorderen rechten Abstützaggregat A abgeführt und in das hintere rechte Abstützaggregat A zugeführt werden soll, werden die Ventile 1e und 4a geöffnet, so daß die Pumpe einen Strom des Hydraulikmediums in der gewünschten Weise erzeugen kann.

In grundsätzlich gleicher Weise können die Abstützaggregate A auf der linken Fahrzeugseite miteinander über die Pumpe 5 verbunden werden.

Darüber hinaus kann Wankbewegungen des Fahrzeuges entgegengewirkt werden, indem Hydraulikmedium aus einem Abstützaggregat A eines Rades auf der einen Fahrzeugseite mittels der Pumpe 5 einem Abstützaggregat A eines Rades auf der anderen Fahrzeugseite zugeführt wird Beispielsweise kann Hydraulikmedium aus dem rechten vorderen Abstützaggregat A in das linke vordere Abstützaggregat A eingeführt werden, indem die Ventile 1e und 2a geöffnet werden.

Falls die Verschiebung des Hydraulikmediums in umgekehrter Richtung erfolgen soll, werden die Ventile 2e und 1a geöffnet.

Die Pumpe 5 braucht jeweils nur gegen die Differenz der hydraulischen Drücke in verschiedenen Abstützaggregaten A zu arbeiten. Da diese Differenz immer relativ gering bleibt, genügt für die Pumpe 5 eine geringe Leistung.

Um jeweils genau definierte Mengen zwischen den Abstützaggregaten A zu verschieben, werden die Ventile 1a bis 4e vorzugsweise im Multiplexbetrieb gesteuert, derart, daß jeweils nur eines der Ventile 1e bis 4e und eines der Ventile 1a bis 4a gleichzeitig geöffnet sind. Dementsprechend sind jeweils nur zwei Abstützaggregate A über die Pumpe 5 miteinander gekoppelt. Durch schnellen taktweisen Wechsel der jeweils geöffneten Paare der geöffneten Ventile 1a bis 4e besteht dann die Möglichkeit, einander überlagernde Verschiebungen von Hydraulikmedium zwischen beliebigen Aggregaten A simultan durchzuführen. Beispielsweise kann einerseits Hydraulikmedium aus dem rechten hinteren Abstützaggregat abgeführt und dem rechten vorderen Abstützaggregat zugeleitet und andererseits auch gleichzeitig Hydraulikmedium zwischen den beiden linken Abstützaggregaten in gleicher Richtung verschoben werden. Dazu werden abwechselnd die Ventilpaare 3e, 2a und 4e, 1a in schneller Taktfolge alternierend geöffnet und geschlossen.

Die Steuerung der Ventile 1a bis 4e erfolgt mit der Unterstützung eines nicht dargestellten Rechners, welcher die Signale von den Rädern R zugeordneten Hubstellungsgebern auswertet, um Nick- bzw. Wankbewegungen des Fahrzeuges feststellen zu können. Zusätzlich kann der Rechner auch Signale vom Fahrpedal bzw. Motor des Fahrzeuges sowie vom Bremssystem desselben erhalten, um die beim Bremsen bzw. Beschleunigen des Fahrzeuges auftretende Neigung zu Nickbewegungen bereits vor einer derartigen Bewegung "bemerken" zu können. Damit kann einer zu erwartenden Nickbewegung bereits vorbeugend durch entsprechende Ansteuerung der Ventile 1a bis 4e entgegengewirkt werden.

Darüber hinaus kann der Rechner mit einem Lenkwinkelgeber sowie einem Geschwindigkeitsmesser des Fahrzeuges verbunden sein, um bereits bei Beginn einer Kurvenfahrt bzw. bei Beginn einer Lenkbewegung die jeweils zu erwartende Querbeschleunigung des Fahrzeuges und damit die Tendenz des Fahrzeuges, eine zur Kurvenaußenseite hin geneigte Lage einzunehmen, feststellen zu können. Damit kann der Rechner die Ventile 1a bis 4e bereits vorbeugend so ansteuern, daß sich das Fahrzeug nicht oder nur wenig zur Kurvenaußenseite neigt. Grundsätzlich ist es auch möglich, eine Neigung des Fahrzeuges zur Kurveninnenseite hin zu erzwingen, indem von den kurveninneren Abstützaggregaten A entsprechend viel Hydraulikmedium abgeführt und den kurvenäußeren Abstützaggregaten A zugeführt wird.

Ein besonderer Vorzug des Bypaß- und Fördersystems liegt darin, daß bei der Aussteuerung von Nick- und Wankbewegungen des Fahrzeuges die Abstimmung des Federungssystemes praktisch unverändert bleibt.

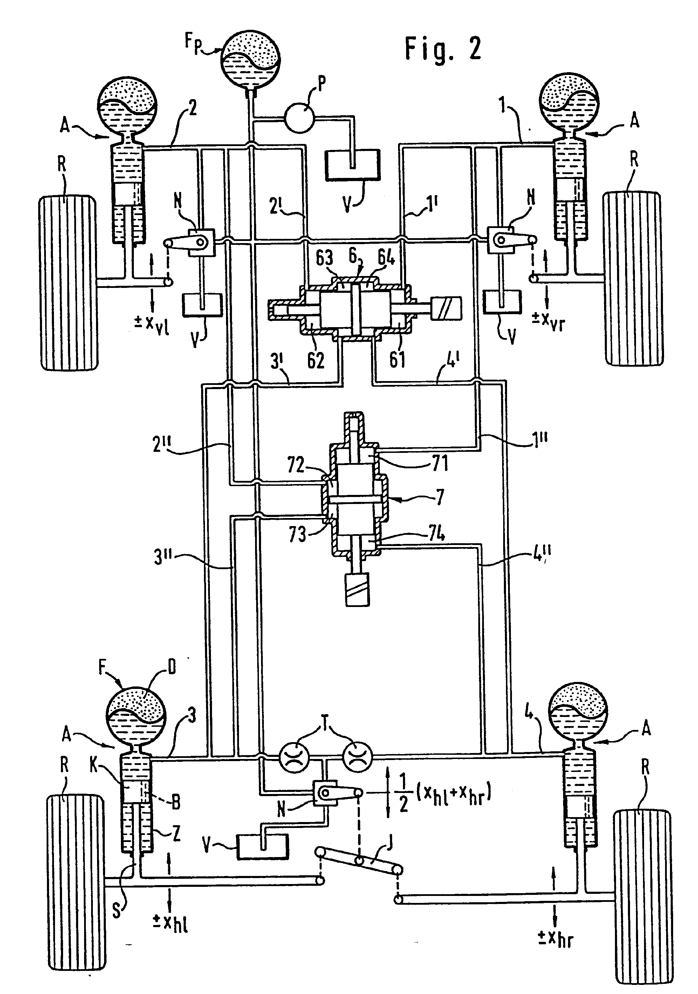

Bei der in Fig. 2 dargestellten Ausführungsform der Erfindung sind die Abstützaggregate A über die Leitungen 1' bis 4' mit einem motorisch angetriebenen Kolben-Zylinder-Aggregat 6 und über die Leitungen 1'' bis 4'' mit einem motorisch angetriebenen Kolben-Zylinder-Aggregat 7 verbunden.

Jedes der Kolben-Zylinder-Aggregate 6 und 7 besitzt vier Kammern 61 bis 64 bzw. 71 bis 74, wobei im Falle des Kolben-Zylinder-Aggregates 6 in Mittellage des Kolbens zumindest die Kammern 61 und 62 einerseits sowie die Kammern 63 und 64 andererseits gleiche Größe haben (in der Regel sind alle Kammern 61 bis 64 gleich groß), während beim Kolben-Zylinder-Aggregat 74 alle Kammern 71 bis 74 in Mittellage des Kolbens gleich groß sind. Im übrigen sind die Kolben-Zylinder-Aggregate 6 und 7 so ausgelegt, daß das Gesamtvolumen der Kammern bei Verschiebung der Kolben konstant bleibt.

Die Kammern der Kolben-Zylinder-Aggregate 6 und 7 sind jeweils mit einem der Abstützaggregate A verbunden, und zwar derart, daß bei Verschiebung des Kolbens des Kolben-Zylinder-Aggregates 6 jeweils Hydraulikmedium zwischen den Abstützaggregaten auf der rechten Fahrzeugseite und den Abstützaggregaten auf der linken Fahrzeugseite verschoben wird. Beispielsweise wird bei Verschiebung des Kolbens des Kolben-Zylinder-Aggregates 6 nach links einerseits Hydraulikmedium aus dem vorderen rechten Abstützaggregat über die Leitung 1' abgeführt und gleichzeitig Hydraulikmedium über die Leitung 2' in das linke vordere Abstützaggregat eingeführt. Andererseits erfolgt simultan eine entsprechende Verschiebung des Hydraulikmediums über die Leitungen 4' und 3' bei den Abstützaggregaten der Hinterräder.

Auf diese Weise läßt sich die Seitenneigung des Fahrzeuges verändern bzw. einer Wankbewegung entgegenwirken.

Die Kammern 71 bis 74 des Kolben-Zylinder-Aggregates 7 sind mit den Leitungen 1'' bis 4'' verbunden, und zwar derart, daß eine Verschiebung des Hydraulikmediums zwischen den Abstützaggregaten der Vorderräder und denjenigen der Hinterräder ermöglicht wird. Beispielsweise wird bei einer Verschiebung des Kolbens des Kolben-Zylinder-Aggregates 7 in Fig. 2 nach oben Hydraulikmedium aus den hinteren Abstützaggregaten über die Leitungen 3'' und 4'' abgeführt und gleichzeitig den vorderen Abstützaggregaten über die Leitungen 1'' und 2'' Hydraulikmedium zugeführt. Auf diese Weise kann einer Nickbewegung des Fahrzeuges entgegengewirkt werden.

Abweichend von der in Fig. 2 dargestellten Ausführungsform, bei der die Kolben-Zylinder-Aggregate 6 und 7 jeweils vier Kammern besitzen, können auch jeweils Kolben-Zylinder-Aggregate mit zwei Kammern paarweise angeordnet sein und parallel betätigt werden. An der dargestellten Funktion ändert sich damit nichts.

Darüber hinaus könnten auch hydrostatische Pumpen mit rotierendem Verdrängungsmechanismus nach der Art von Zahnrad- oder Flügelzellenpumpen anstelle der in Fig. 2 dargestellten Kolben-Zylinder-Aggregate vorgesehen werden. Damit auch in diesem Falle mehrere Hydraulikkreise vorhanden sind, um auftretende Wankmomente an beiden Fahrzeugachsen durch Umpumpen von Hydraulikmedium entsprechend anteilig abzustützen, können zwei hydrostatische Pumpen mechanisch gekoppelt werden, welche gleiche Förderleistung aufweisen, falls die Wankmomente etwa hälftig von Vorder- und Hinterachse aufgenommen werden sollen.

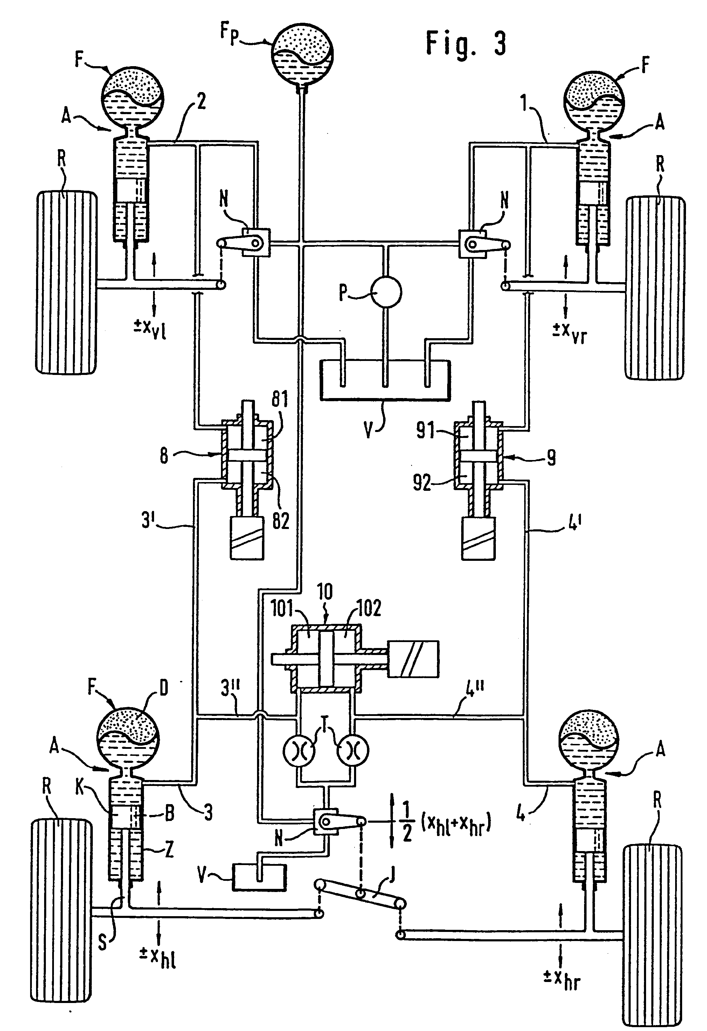

Bei der in Fig. 3 dargestellten Ausführungsform der Erfindung sind drei Kolben-Zylinder-Aggregate 8 bis 10 mit jeweils zwei Kammern 81, 82 bzw. 91, 92 bzw. 101, 102 angeordnet. Dabei sind die Kammern 81 und 91 der Kolben-Zylinder-Aggregate 8 und 9 über die Leitungen 1 und 2 mit den vorderen Abstützaggregaten A verbunden. Die hinteren Abstützaggregate A sind über die Leitungen 3' und 4' einerseits mit den Kammern 82 und 92 der Kolben-Zylinder-Aggregate 8 und 9 und andererseits über die Leitungen 3'' und 4'' mit den Kammern 101 und 102 des Kolben-Zylinder-Aggregates 10 verbunden. In Mittellage der Kolben besitzen die Kammern 81, 82, 91 und 92 gleiche Größe. Die Kammern 101 und 102 sind in Mittellage des Kolbens des Kolben-Zylinder-Aggregates 10 untereinander gleich groß und etwa doppelt so groß wie die Kammern der beiden übrigen Kolben-Zylinder-Aggregate 8 und 9 in Mittellage der jeweiligen Kolben.

Wenn der Kolben des Kolben-Zylinder-Aggregates 10 stillgehalten wird und die Kolben der Kolben-Zylinder-Aggregate 8 und 9 simultan in Fig. 3 nach oben oder unten verschoben werden, so wird Hydraulikmedium zwischen den vorderen und hinteren Abstützaggregaten verschoben. Bei einer Verschiebung der Kolben der Kolben-Zylinder-Aggregate 8 und 9 nach oben wird beispielsweise Hydraulikmedium aus den hinteren Abstützaggregaten über die Leitungen 3' und 4' abgeführt und gleichzeitig Hydraulikmedium den vorderen Abstützaggregaten über die Leitungen 1 und 2 zugeführt. Auf diese Weise kann Nickbewegungen des Fahrzeuges entgegengewirkt werden.

Um die Seitenneigung des Fahrzeuges zu verändern bzw. um Wankbewegungen des Fahrzeuges entgegenzuwirken, kann Hydraulikmedium zwischen den Abstützaggregaten verschiedener Fahrzeugseiten verschoben werden, indem der Kolben des Kolben-Zylinder-Aggregates 8 beispielsweise nach unten, der Kolben des Kolben-Zylinder-Aggregates 10 nach rechts und der Kolben des Kolben-Zylinder-Aggregates 9 nach oben (oder in der jeweils umgekehrten Richtung) verschoben wird. Da die Kapazität des Kolben-Zylinder-Aggregates 10 etwa doppelt so groß wie diejenige des Kolben-Zylinder-Aggregates 8 bzw. 9 ist, kann die Kammer 101 des Kolben-Zylinder-Aggregates 10 bei der angegebenen Verschieberichtung neben dem aus der Kammer 82 des Kolben-Zylinder-Aggregates 8 verdrängten Hydraulikmedium auch eine entsprechende Menge des Hydraulikmediums aus dem Abstützaggregat des linken Hinterrades (in Fig. 3 links unten) aufnehmen. In entsprechender Weise kann aus der Kammer 102 des Kolben-Zylinder-Aggregates 10 verdrängtes Hydraulikmedium etwa zur einen Hälfte in das Abstützaggregat des rechten Hinterrades (in Fig. 3 rechts unten) eingeführt und etwa zur anderen Hälfte von der Kammer 92 des Kolben-Zylinder-Aggregates 9 aufgenommen werden. Dabei wird gleichzeitig aus der Kammer 91 des Kolben-Zylinder-Aggregates Hydraulikmedium verdrängt und über die Leitung 1 dem Abstützaggregat des rechten Vorderrades zugeführt.

Auch wenn es in der Regel nicht notwendig ist, gibt das in Fig. 3 dargestellte System die Möglichkeit, Hydraulikmedium ausschließlich zwischen den Abstützaggregaten der Vorderräder oder den Abstützaggregaten der Hinterräder zu verschieben.

Zur Verschiebung von Hydraulikmedium zwischen den Abstützaggregaten der Hinterräder genügt es, die Kolben der Kolben-Zylinder-Aggregate 8 und 9 stillzusetzen und den Kolben des Kolben-Zylinder-Aggregates 10 zu verschieben. Bei Verschiebung des Kolbens des Kolben-Zylinder-Aggregates 10 nach rechts wird dabei Hydraulikmedium über die Leitung 3'' aus dem Abstützaggregat des linken Hinterrades abgeführt und gleichzeitig über die Leitung 4'' Hydraulikmedium in das Abstützaggregat des rechten Hinterrades eingeleitet.

Wenn nun beispielsweise Hydraulikmedium aus dem Abstützaggregat des rechten Vorderrades über die Leitung 1 abgeführt und gleichzeitig Hydraulikmedium in das Abstützaggregat des linken Vorderrades eingeführt werden soll, werden der Kolben des Kolben-Zylinder-Aggregates 9 in Fig. 3 nach unten, der Kolben des Kolben-Zylinder-Aggregates 10 nach links und der Kolben des Kolben-Zylinder-Aggregates 8 nach oben verschoben, und zwar derart, daß die Volumensverkleinerung der Kammer 92 des Kolben-Zylinder-Aggregates 9 der Volumensvergrößerung der Kammer 102 des Kolben-Zylinder-Aggregates 10 und die Volumensverkleinderung der Kammer 101 dieses Kolben-Zylinder-Aggregates 10 der Volumensvergrößerung der Kammer 82 des Kolben-Zylinder-Aggregates 8 entsprechen.

Im Falle einer Störung im Bypaß- und Fördersystem, insbesondere bei Störungen des dieses System steuernden Rechners, ist bevorzugt vorgesehen, das Bypaß- und Fördersystem unter Blockierung seiner Leitungen stillzusetzen. Danach kann dann weitergefahren werden, wobei sich das Fahrzeug wie ein solches mit herkömmlichem hydropneumatischen Federungssystem verhält.

Bei der in Fig. 1 dargestellten Ausführungsform werden bei einer derartigen Störung die Pumpe 5 stillgesetzt und alle Ventile 1a bis 4e geschlossen. Hierzu ist es vorteilhaft, wenn die Ventile 1a bis 4e automatisch, z.B. durch Rückstellfedern, in die Schließlage gebracht werden, sobald die zur Steuerung der Ventile 1a bis 4e dienenden Elektromagnete stromlos geschaltet werden.

Um bei den in den Fig. 2 und 3 dargestellten Ausführungsformen einen entsprechenden Notbetrieb des Fahrzeuges zu ermöglichen, genügt es, die Kolben-Zylinder-Aggregate 6 bis 10 mit selbsthemmenden Antrieben, z.B. Spindelaggregaten, zu versehen, so daß die Kolben dieser Aggregate bei Abschaltung der Antriebe unbeweglich gehalten werden.

Soweit anstelle der Kolben-Zylinder-Aggregate 6 bis 10 in den Fig. 2 und 3 rotierende Pumpen eingesetzt werden, sind solche Pumpen, z.B. Zahnradpumpen, bevorzugt, die die Verbindung zwischen Eingang und Ausgang der Pumpe ohne zusätzliche Absperrventile zu sperren vermögen, wenn das Förderorgan der Pumpe stillgehalten wird. Werden derartige Pumpen mit selbsthemmenden Antrieben versehen, so genügt es, die Antriebe stillzusetzen bzw. abzuschalten, um die Leitungen des Bypaß- und Fördersystems im Falle einer Störung zu blockieren.

Gegebenenfalls können zu diesem Zweck jedoch auch gesonderte Absperrventile angeordnet sein.

Ein besonderer Vorzug der Erfindung liegt darin, daß mit dem Bypaß- und Fördersystem auch die Steuertendenz - Untersteuern, Übersteuern oder neutrales Verhalten - des Fahrzeuges beeinflußt bzw. bestimmt werden kann. Beispielsweise kann Wankbewegungen des Fahrzeuges in der Weise entgegengesetzt werden, daß an Vorderachse und Hinterachse unterschiedlich große, der Wankbewegung entgegenwirkende Drehmomente relativ zur Fahrzeuglängsachse erzeugt werden, indem die einerseits zwischen den Abstützaggregaten der Vorderachse und andererseits zwischen den Abstützaggregaten der Hinterachse verschobenen Mengen des Hydraulikmediums entsprechend - gegebenenfalls auch stark unterschiedlich - bemessen sind.

Um beispielsweise bei der Ausführungsform nach Fig. 2 zum Ausgleich von Wankmomenten des Fahrzeuges an Vorder- und Hinterachse deutlich unterschiedliche Gegenmomente erzeugen zu können, können die hydraulisch wirksamen Querschnitte der Kolben in den Kammern 61 sowie 62 einerseits und 63 sowie 64 andererseits deutlich unterschiedlich bemessen sein. In der Regel ist es erwünscht, Wankmomenten verstärkt über die Vorderachse entgegenzuwirken; dementsprechend wird in der Regel der wirksame Kolbenquerschnitt in den Kammern 61 und 62 größer sein als in den Kammern 63 und 64.

## Patentansprüche

1. Hydropneumatisches Federungssystem für Kraftfahrzeuge mit den Fahrzeugrädern (R) zugeordneten hydropneumatischen Abstützaggregaten (A) und einer damit zusammenwirkenden, relativ träge arbeitenden Niveauregulierung, die über Niveausteuerventile (N) die Abstützaggregate (A) in Abhängigkeit von der Hubstellung der Räder (R) zur Aufnahme von Hydraulikmedium mit einer hydraulischen Druckquelle (P) bzw. zur Ableitung von Hydraulikmedium aus den Abstützaggregaten (a) mit einer Reservoir (V) verbindet, sowie mit einem parallel zur Niveauregulierung zwischen den Abstützaggregaten (A) angeordneten Bypaßund Fördersystem, welches Hydraulikmedium unter Umgehung des Reservoirs (V) und der Druckquelle (P) zwischen Abstützaggregaten (A) verschiedener Räder (R) zu verschieben gestattet,
**dadurch gekennzeichnet,**
daß das Bypaß- und Fördersystem ein aktiv angetriebenes Förderaggregat (5 bis 10) zur direkten Verschiebung von Hydraulikmedium zwischen einander bezüglich der Fahrzeuglängsachse und/oder der Fahrzeugquerachse gegenüberliegenden Abstützaggregaten (A) in Abhängigkeit von der Hubstellung (xᵥᵣ, xᵥₗ,xₕᵣ,xₕₗ) der Räder (R) und/oder in Abhängigkeit von auf das Fahrzeug einwirkenden Nick- bzw. Wankmomenten aufweist, im Vergleich zur Niveauregulierung (N,V,Fₚ,P) schnellwirkend arbeitet und sich bei einer Störung, insbesondere eines zugeordneten Rechners, unter Blockierung seiner Leitungen selbstsichernd stillsetzt, wobei ein im Zeitpunkt des Auftretens der Störung vorliegender Lageausgleich über die Niveauregulierung abgebaut wird.

2. Hydropneumatisches Federungssystem nach Anspruch 1,
**dadurch gekennzeichnet,**
daß das Bypaß- und Fördersystem im wesentlichen aus einem zwischen den Abstützaggregaten (A) angeordneten Leitungsnetz mit einer motorisch angetriebenen Pumpe (5) sowie am Leitungsnetz angeordneten Absperrventilen (1a,1e bis 4a,4e) besteht, welche jeweils ein Abstützaggregat (A) bzw. eine Gruppe der Abstützaggregate mit der Eingangsseite der Pumpe (5) und ein anderes Abstützaggregat bzw. eine andere Gruppe der Abstützaggregate mit der Ausgangsseite der Pumpe (5) zu verbinden bzw. die Abstützaggregate oder die Gruppen der Abstützaggregate voneinander abzutrennen gestatten.

3. Hydropneumatisches Federungssystem nach Anspruch 1,
**dadurch gekennzeichnet,**
daß zwischen einander bezüglich der Fahrzeugquerachse und/oder der Fahrzeuglängsachse gegenüberliegenden Abstützaggregaten (A) Verdränger- bzw. Kolben-Zylinder-Aggregate (6,7) mit jeweils mindestens zwei Kammern angeordnet sind, deren Gesamtvolumen unabhängig vom Verdränger- bzw. Kolbenhub konstant bleibt, wobei jeweils eine der Kammern mit einem Abstützaggregat auf der einen Seite und die andere der Kammern mit einem Abstützaggregat auf der anderen Seite der Fahrzeuglängsachse bzw. der Fahrzeugquerachse verbunden ist.

4. Hydropneumatisches Federungssystem nach einem der Ansprüche 1 bis 3,
**dadurch gekennzeichnet,**
daß das Bypaß- und Fördersystem mittels Rechners in Abhängigkeit von den Hubstellungen (xᵥᵣ,xᵥₗ,xₕᵣ,xₕₗ) der Räder (R) und/oder in Abhängigkeit von der Längs- bzw. Querbeschleunigung des Fahrzeuges und/oder in Abhängigkeit vom Lenkwinkel bzw. Lenkwinkeländerungen sowie der Fahrgeschwindigkeit des Fahrzeuges steuerbar ist.

5. Hydropneumatisches Federungssystem nach einem der Ansprüche 1 bis 4,
**dadurch gekennzeichnet,**
daß parallel zu den hydropneumatischen Abstützaggregaten (A) mechanische Federaggregate angeordnet sind.

6. Hydropneumatisches Federungssystem nach einem der Ansprüche 1 bis 5,
**dadurch gekennzeichnet,**
daß die Förderaggregate (6 bis 10) des Bypaß- und Fördersystems selbsthemmende Antriebe besitzen und im Stillstand die mit ihnen verbundenen Leitungen voneinander abgetrennt halten.

7. Hydropneumatisches Federungssystem nach einem der Ansprüche 1 bis 6,
**dadurch gekennzeichnet,**
daß das Bypaß- und Fördersystem zum Ausgleich bzw. zur Verhinderung von Wankbewegungen des Fahrzeuges zwischen den Abstützaggregaten (A) der Hinterachse derart bemessene Mengen des Hydraulikmediums verschiebt, daß an Vorder- und Hinterachse unterschiedliche, dem Wankmoment des Fahrzeuges entgegenwirkende Momente erzeugt werden und eine gewünschte Steuertendenz des Fahrzeuges erreicht wird.

## Claims

1. A hydropneumatic suspension system for motor vehicles with, associated with the vehicle wheels (R), hydropneumatic support assemblies (A) and, cooperating therewith, a relatively slow-acting levelling arrangement which, via level controlling valves (N) connects the supporting assemblies (A) with a hydraulic pressure source (P) as a function of the lifted position of the wheels (R) in order to take in hydraulic medium or to a reservoir (V) in order to divert hydraulic medium from the support assemblies (A) and with, disposed parallel with the levelling arrangement and between the support assemblies (A), a bypass and delivery system which makes it possible to displace hydraulic medium between support assemblies (A) of different wheels (R), bypassing the reservoir (V) and the pressure source (P), characterised in that the bypass and delivery system comprises an actively driven delivery assembly (5 to 10) for the direct displacement of hydraulic medium between support assemblies (A) which are opposite one another in relation to the longitudinal axis and/or transverse axis of the vehicle, as a function of the lifted position (xᵥᵣ, xᵥₗ, xₕᵣ, xₕₗ) of the wheels (R) and/or as a function of pitching or rolling moments acting on the vehicle, is quick-acting compared with the levelling arrangement (N, V, Fₚ, P) and in the event of a fault, particularly of an associated computer, shuts down in self-protecting fashion, its lines being blocked, a positional compensation present at the moment the fault occurs being dissipated via the levelling arrangement.

2. A hydropneumatic suspension system according to Claim 1, characterised in that the bypass and delivery system consists substantially of a network of pipes disposed between the support assemblies (A) and with a motor-driven pump (5) and, disposed on the network of pipes, shut-off valves (1a, 1e to 4a, 4e) each of which makes it possible to connect a support assembly (A) or a group of support assemblies to the intake side of the pump (5) and another support assembly or another group of support assemblies to the outlet side of the pump (5) or to isolate the support assemblies or the groups of support assemblies from one another.

3. A hydropneumatic suspension system according to Claim 1, characterised in that between support assemblies (A) which are opposite one another in relation to the transverse axis and/or the longitudinal axis of the vehicle there are displacement or piston-cylinder assemblies (6, 7) each with at least two chambers, the total volume of which remains constant regardless of the displacement or piston travel, in each case one of the chambers being connected to a support assembly on one side while the other of the chambers is connected to a support assembly on the other side of the longitudinal axis or transverse axis of the vehicle.

4. A hydropneumatic suspension system according to one of Claims 1 to 3, characterised in that the bypass and delivery system can be controlled by means of a computer as a function of the lifted positions (xᵥᵣ, xᵥₗ, xₕᵣ, xₕₗ) of the wheels (R) and/or as a function of the longitudinal or transverse acceleration of the vehicle and/or as a function of the steering angle or variations in steering angle and the travelling speed of the vehicle.

5. A hydropneumatic suspension system according to one of Claims 1 to 4, characterised in that mechanical spring assemblies are disposed parallel with the hydropneumatic support assemblies (A).

6. A hydropneumatic suspension system according to one of Claims 1 to 5, characterised in that the delivery assemblies (6 to 10) of the bypass and delivery system have irreversible drives and, when shut down, maintain isolated from one another, the pipes which are connected to them.

7. A hydropneumatic suspension system according to one of Claims 1 to 6, characterised in that for compensating and/or for preventing pitching movements of the vehicle the bypass and delivery system displaces between the support assemblies (A) of the rear axle quantities of hydraulic medium which are so measured that different moments are generated at the front and rear axles which counteract the pitching movement of the vehicle and so that a desired control tendency of the vehicle is achieved.

## Revendications

1. Système de suspension hydropneumatique, pour véhicules automobiles avec des groupes d'appui (A) hydropneumatiques associés aux roues de véhicule (R) et une régulation de niveau, coopérant avec ces groupes et travaillant de façon relativement inerte, qui relie à un réservoir (V), par l'intermédiaire de soupapes de commande de niveau (N) les groupes d'appui (A) en fonction de le position de débattement des roues (R), en vue de recevoir un fluide d'hydraulique, à l'aide d'une source de pression hydraulique (P), respectivement en vue d'évacuer du fluide hydraulique hors des groupes d'appui (a), ainsi qu'avec un système de dérivation et de refoulement, disposé parallèlement à la régulation de niveau, entre les groupes d'appui (A), permettant de déplacer du fluide hydraulique, en contournant le réservoir (V) et la source de pression (P) entre les groupes d'appui (A) de différentes roues (R), caractérisé en ce que le système de dérivation et de refoulement présente un groupe de refoulement à entraînement actif (5 à 10) destiné à opérer un déplacement direct du fluide hydraulique entre des groupes d'appui opposés, par rapport à l'axe longitudinal du véhicule et/ou à l'axe transversale du véhicule, en fonction de la position de débattement (Xᵥᵣ, Xᵥₗ, Xₕᵣ, Xₕₗ) des roues (R) et/ou en fonction des couples de tangage et de roulis agissant sur le véhicule, travaille à vitesse rapide en comparaison de la régulation de vitesse (N, V, Fp, P) et se met à l'arrêt, en auto-sécurité, en cas de perturbation, en particulier d'un ordinateur associé, en bloquant ses conduites, une compensation de position s'étant opérée au moment de la survenance de la perturbation étant annulée par l'intermédiaire de la régulation de niveau.

2. Système de suspension hydropneumatique selon la revendication 1, caractérisé en ce que le système de dérivation et de refoulement est composé essentiellement d'un réseau de conduite, disposé entre les groupes d'appui (A), avec une pompe (5) à entraînement motorisé ainsi que des soupapes d'isolement (1a, 1e à 4a, 4e) disposées sur le réseau de conduite, qui relient chaque fois un groupe d'appui (A), respectivement un groupe des groupes d'appui au côté entrée de la pompe (5) et un autre groupe d'appui, respectivement un autre groupe de groupe d'appui au côté sortie de la pompe (5), respectivement permettant d'isoler les uns des autres les groupes d'appui ou les groupes de groupes d'appui.

3. Système de suspension hydropneumatique selon la revendication 1, caractérisé en ce qu'entre des groupes d'appui (A) opposés les uns par rapport aux autres, par rapport à l'axe transversale de véhicule et/ou à l'axe longitudinal de véhicule sont disposés des groupes à plongeur, respectivement à piston et cylindre (6, 7) comportant chacun au moins deux chambres, dont le volume total reste constant indépendamment de la course du plongeur, respectivement du piston, ou chaque fois l'une des chambres est reliée à un groupe d'appui, situé d'un côté, et l'autre des chambres est reliée à un groupe d'appui, situé de l'autre côté de l'axe longitudinal de véhicules, respectivement de l'axe transversal de véhicule.

4. Système de suspension hydropneumatique selon l'une des revendications 1 à 3, caractérisé en ce que le système de dérivation et de refoulement est susceptible d'être commandé au moyen d'un ordinateur, en fonction des positions de débattement (Xᵥᵣ, Xᵥₗ, Xₕᵣ, Xₕₗ) des roues (R) et/ou en fonction de l'accélération longitudinale, respectivement transversale du véhicule, et/ou en fonction de l'angle de braquage, respectivement des variations d'angle de braquage ainsi que de la vitesse de roulage du véhicule.

5. Système de suspension hydropneumatique selon l'une des revendications 1 à 4, caractérisé en ce que des groupes élastiques à fonctionnement mécanique sont disposés parallèlement aux groupes d'appui (A) à fonctionnement hydropneumatique.

6. Système de suspension hydropneumatique selon l'une des revendications 1 à 5, caractérisé en ce que les groupes de refoulement (6 à 10) du système de dérivation et de refoulement comportent des entraînements auto-bloquants et maintiennent isolées les unes des autres à l'arrêt les conduites leurs étant reliées.

7. Système de suspension hydropneumatique selon l'une des revendications 1 à 6, caractérisé en ce que le système de dérivation et de refoulement déplace en vue d'opérer la compensation, respectivement l'empêchement de mouvement de roulis du véhicule entre les groupes d'appui (A) de l'essieu arrière, des quantités de fluide de refroidissement de valeur telle que sont produits sur les essieux avant et arrière des couples antagonistes différents, agissant à l'encontre du couple de roulis du véhicule et qu'est obtenue une tendance de commande souhaitée du véhicule.
